Europäisches Patentamt

European Patent Office

Office européen des brevets

(11) Publication number: **0 062 438**
**A2**

(12) **EUROPEAN PATENT APPLICATION**

(21) Application number: **82301475.8**

(22) Date of filing: **23.03.82**

(51) Int. Cl.³: **G 06 F 13/00**

(30) Priority: **30.03.81 JP 45625/81**

(43) Date of publication of application: **13.10.82**
**Bulletin 82/41**

(84) Designated Contracting States: **DE FR GB NL**

(71) Applicant: **FUJITSU LIMITED, 1015, Kamikodanaka Nakahara-ku, Kawasaki-shi Kanagawa 211 (JP)**

(72) Inventor: **Suzuki, Tetsuo, 2-20-27, Shimomeguro Meguro-ku, Tokyo 153 (JP)**

(74) Representative: **Allman, Peter John et al, Marks and Clerk Scottish Life House Bridge Street, Manchester M3 3DP (GB)**

(54) **Microcomputer having memory content protecting means.**

㊼ A microcomputer having a built-in read-only memory which stores programs and data, a data dump means which outputs the content of the built-in read-only memory, and a dump inhibiting means which inhibits operation of the data dump means, thereby inhibiting imitation of products using the microcomputer by third persons.

## MICROCOMPUTER HAVING MEMORY CONTENT PROTECTING MEANS

### BACKGROUND OF THE INVENTION

(1) Field of the Invention

The present invention relates to a microcomputer having a means for inhibiting dumping of information stored in a built-in read-only memory (ROM) or the like or having a means for rendering it impossible to decode the dumped data.

(2) Description of the Prior Art

ROM's built in microcomputers store programs or data. If the content of these programs or data becomes known to third persons, there is a risk of their imitating the product using these microcomputers, for example, television games. Accordingly, it is very important to maintain the secrecy of the content of ROM"s. On the other hand, in a microcomputer of this type, a data dumping means is indispensable for performing the operation test of the microcomputer or outputting the content of the ROM's at a designated address for debugging of the program.

Conventional microcomputers do not include means for inhibiting the operation of the above-mentioned data dumping mechanism. Accordingly, third persons have been able to learn the software of the microcomputer and, therefore, immediately imitate the products using this microcomputer.

### SUMMARY OF THE INVENTION

It is, therefore, the principal object of the present invention to provide a microcomputer comprising an ROM, for storing programs and/or data, and a data dump means, wherein a means for inhibiting the operation of the data dump means is provided to make it impossible for third persons to learn the content of the ROM and imitate the product using this microcomputer.

It is another object of the present invention to provide a microcomputer comprising an ROM for storing programs and/or data and a data dump means, wherein a means is provided to render it impossible for third persons to decode the dumped data outputted by the data dump means.

More specifically, in accordance with the present invention, there is provided a microcomputer comprising: a built-in ROM for storing programs and data; a data dump means for outputting the content of the built-in ROM; and a dump inhibiting means for inhibiting the operation of the data dump means.

BRIEF DESCRIPTION OF THE INVENTION

Figure 1 is a block circuit diagram illustrating a schematic circuit structure of a microcomputer as an embodiment of the present invention;

Fig. 2 is a plan view illustrating an arrangement of circuit components of the microcomputer of Fig. 1;

Fig. 3 is a partial block circuit diagram illustrating a data dump means used in the microcomputer of Fig. 1;

Fig. 4 is a circuit diagram illustrating an example of a dump enable flag used in the microcomputer of Fig. 1;

Fig. 5 is a block circuit diagram illustrating another example of a dump enable flag used in the microcomputer of Fig. 1;

Fig. 6A is a schematic block circuit diagram illustrating a data dump means used in a microcomputer as another embodiment of the present invention; and

Fig. 6B is a block circuit diagram illustrating a programmable logic array (PLA) portion of the data dump means of Fig. 6A.

DESCRIPTION OF THE PREFERRED EMBODIMENTS

Some embodiments of the present invention will now be described with reference to the attached drawings.

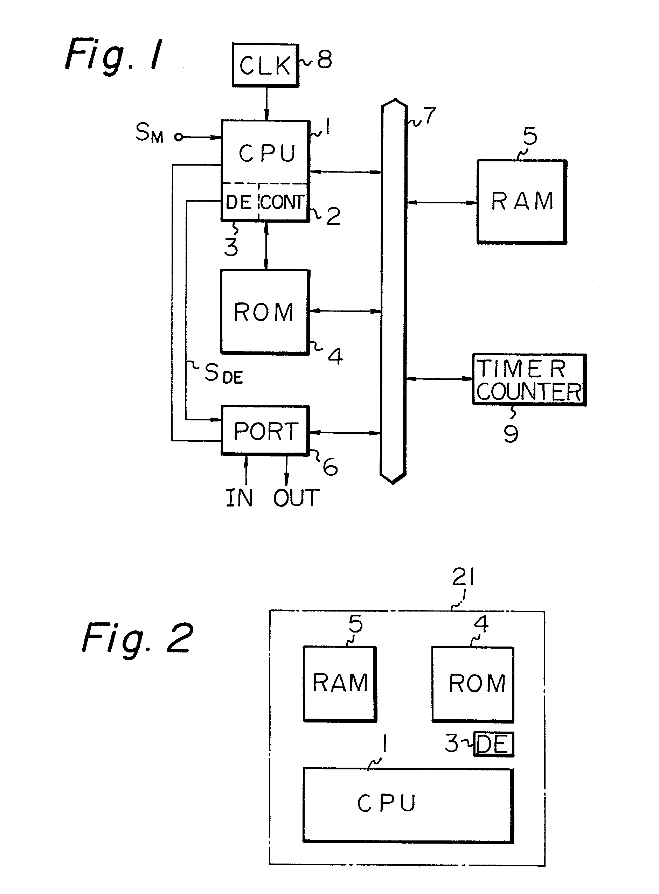

Figure 1 illustrates a schematic circuit structure of a microcomputer as an embodiment of the present invention. The microcomputer of Fig. 1 comprises central processor unit (CPU) 1 including dump controller 2 and dump enable flag 3, ROM 4 storing programs and data, random access memory (RAM) 5, input/output port (I/O port) 6, common bus 7, clock generator 8, and timer counter 9.

In the microcomputer of Fig. 1, when the mode selecting signal $S_M$ applied to CPU 1 is low, CPU 1 executes the usual operating programs stored in ROM 4, i.e., the microcomputer is in a usual operating mode. In the usual operating mode, input data applied to input terminals IN of I/O port 6 are transferred to CPU 1 and/or RAM 5 through the common bus 7 and are processed by CPU 1. The processed data from CPU 1 and/or RAM 5 are transferred through common bus 7 to I/O port 6 and outputted from the output terminals OUT thereof to external circuits. In this case, clock generator 8 supplies a clock pulse to CPU 1 which controls the basic operating cycle thereof, and timer counter 9 generates timing pulses which are used, for example, for effecting periodic timer interruption to CPU 1.

When the mode selecting signal $S_M$ is high, CPU 1 executes a data dump operation, i.e., the microcomputer is in a data dump mode. The data dump operation is effected under the control of dump controller 2 in CPU 1. In the data dump mode, when dump address signal is inputted to the input terminal IN of I/O port 6 and transferred to dump controller 2 through common bus 7, the dump controller reads data from the word of ROM 4 corresponding to the dump address signal and outputs the data from the output terminal OUT of I/O port 6 through common bus 7. However, in this case, if dump enable flag 3 is set in a dump inhibiting condition, the dump enable signal $S_{DE}$ supplied from dump enable flag 3 to I/O port 6 is low and, therefore, the output of the data in the above-mentioned dump address of ROM 4 is inhibited at I/O port 6.

Figure 2 illustrates an arrangement of circuit components of the microcomputer of Fig. 1 disposed on a single semiconductor chip. In the arrangement of Fig. 2, ROM 4 is formed on semiconductor chip 21 as a built-in ROM, together with CPU 1, dump enable flag 3, RAM 5, and the like. Dump enable flag 3 is constituted by using a programmable ROM (PROM) or an erasable and programmable ROM (EPROM), as will be mentioned later. ROM 4 is not limited to a mask ROM, but can be a PROM or an EPROM.

When both ROM 4 and dump enable flag 3 are constituted by EPROM's, ROM 4 and dump enable flag 3 are adjacently disposed on semiconductor chip 21. This is done to inhibit third persons from reading out the content of ROM 4 by irradiating ultraviolet light only on the EPROM of dump enable flag 3 so as to erase only the content of dump enable flag 3. The adjacent disposition makes it impossible to erase only the content of the EPROM of dump enable flag 3. That is, if ultraviolet light is irradiated on the EPROM of dump enable flag 3 to erase the content thereof, the ultraviolet light is also irradiated on ROM 4, which is also constituted by an EPROM. The ultraviolet light affects ROM 4, erasing part or all of its content at the same time. Therefore, readout of the content of ROM 4 by a third persons can be prevented.

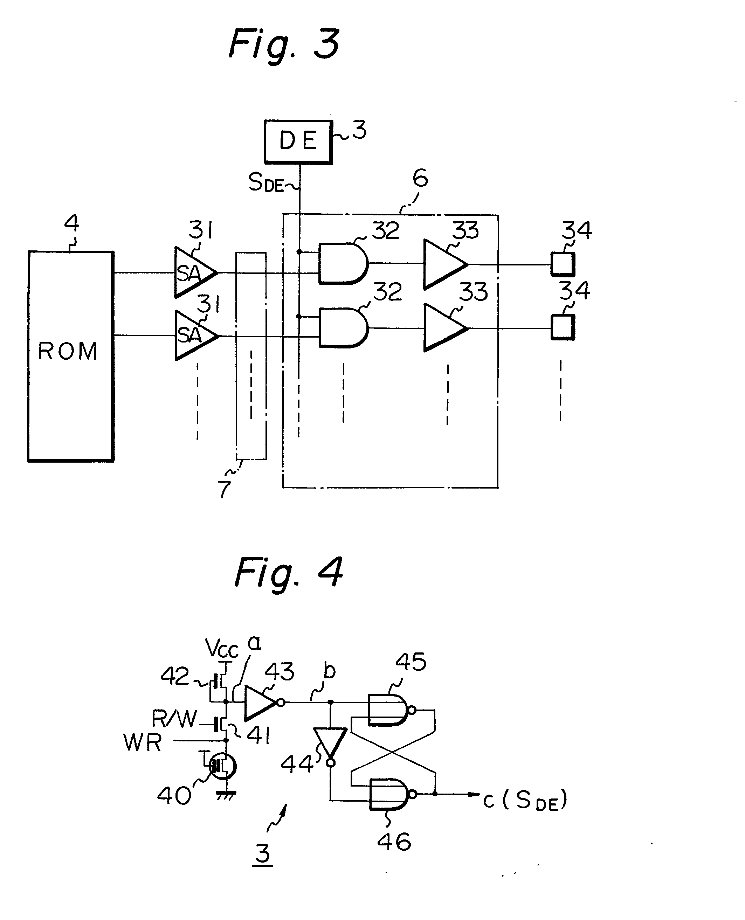

Figure 3 illustrates a schematic circuit used for effecting data dump operation and extracted from the structure of Fig. 1. Fig. 3 shows ROM 4, sense amplifiers 31 corresponding to respective bits, dump enable flag 3, I/O port 6, common bus 7, and output terminals 34 of each bit. I/O port 6 comprises AND gates 32 and output buffer amplifiers 33 corresponding to the respective bits.

In the structure of Fig. 3, when address information, for designating a single word of ROM 4 or a plurality of words within a certain range to be dumped, and dumping instructions are inputted, dumping of the words corresponding to the address information is effected under the control of the aforementioned dump controller 2 in CPU 1 (Fig. 1). In this case, if the output signal, i.e., the dump enable signal $S_{DE}$ from dump enable flag 3, is at a low potential level, the respective AND gates 32 are closed and the dumping output from ROM 4 is not transmitted to output terminals 34. In contrast, if the dump enable signal $S_{DE}$ from dump enable flag 3 is at a high level, the respective AND gates 32 are opened and the readout data from ROM 4 is outputted to output terminals 34 from sense amplifiers 31 through common bus 7 and through AND gates 32 and output buffer amplifiers 33.

Dump enable flag 3 has, for example, a structure as shown in Fig. 4. Dump enable flag 3 comprises n-channel type floating gate avalanche injection type MOS (FAMOS) transistor 40, MOS transistors 41 and 42, inverters 23 and 24, and NOR gates 25 and 26.

In the circuit shown in Fig. 4, when the aforementioned mode selecting signal $S_M$ applied to CPU 1 is high, the gate signal R/W applied to transistor 41 becomes high. At this time, if FAMOS transistor 40 is in a turned-on state, the potential of point $a$ is at a low level while the potential of point $b$ is at a high level. Inverter 44 and NOR gates 45 and 46 constitute an RS flip-flop circuit for effecting the level matching with the internal logic of the microcomputer. In this case, since the signal at point $c$, that is, the dump enable signal $S_{DE}$, is maintained at a high level according to the potential of pont $b$, AND gates 32 shown in Fig. 3 are opened, and the data dumping operation becomes possible. If FAMOS transistor 40 is in a turned-off state, the potential of point $a$ is at a high level. Accordingly, in this case, the dump enable signal $S_{DE}$ of point $c$ is maintained at a low level and the data dumping operation becomes impossible. Therefore, when FAMOS transistor 40 is irradiated with ultraviolet rays, if ROM 4 (Fig. 2) is an EPROM by FAMOS, the content of ROM 4 is erased and FAMOS transistor 40 is simultaneously turned on, so that the data dump operation becomes possible. In the microcomputer according to the present invention, the necessary programs and data are written in ROM 4, which has been irradiated with ultraviolet rays in advance, and confirmation of the operation and debugging are completed. At this point, when data dumping thus becomes unnecessary, transistor 41 is rendered nonconductive, i.e., is turned off, by maintaining gate signal R/W of transistor 41 at a low potential level, and writein of FAMOS transistor 40 is performed by applying a high voltage singal WR to the drain of FAMOS transistor 40 to render said transistor nonconductive. Accordingly, point $\underline{a}$ is turned to a high potential level and, therefore, the dump enable signal $S_{DE}$ from dump enable flag 3 is turned to a low level and the data dump operation is inhibited.

Incidentally, a fuse made, for example, of a polycrystalline silicon may be used instead of FAMOS transistor 40 shown in Fig. 4. In this case, when the data dump operation becomes unnecessary, a large current is caused to flow through this fuse so as to break the fuse, thereby rendering the data dump operation.

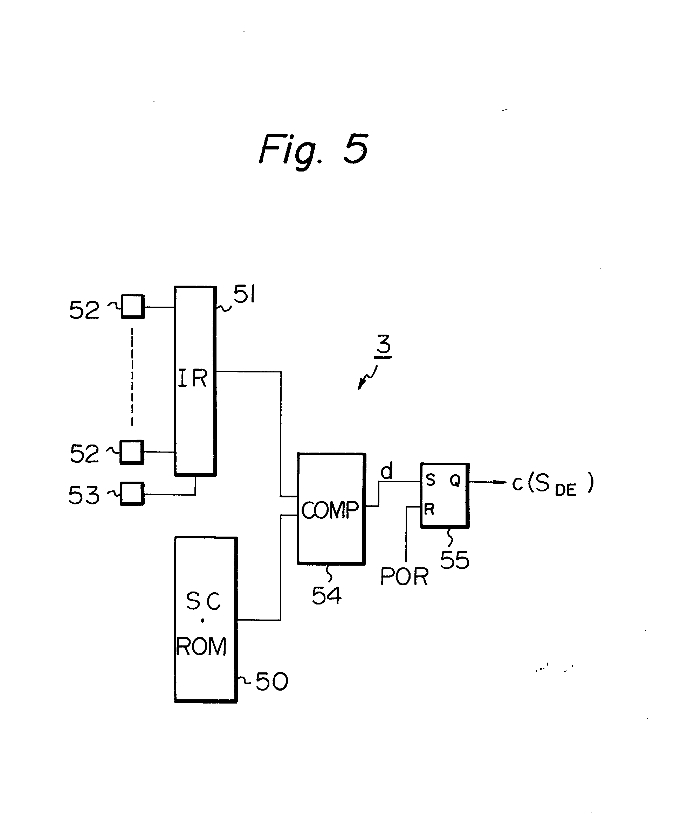

Figure 5 illustrates another example of dump enable flag 3 used in the microcomputer according to the present invention. In the structure of Fig. 5, one must input a secret code to carry out dumping, and the data dump operation is exerted only when the input code matches a predetermined code. The dump enable flag 3 shown in Fig. 5 comprises secret code ROM 50 for storing a secret code determined for each user, input registor 51, secret code input terminals 52, clock signal input terminal 53, a coincidence detecting circuit, i.e., comparator circuit 54, and RS flip-flop 55.

Referring to Fig. 5, to carry out dumping, a clock signal is applied to clock signal input terminal 53 and a secret code is input from secret code input terminals 52. The secret code is stored in input register 51. The comparator circuit 54 compares the secret code stored in input register 51 with the secret code read out from secret code ROM 50. When these secret codes match, the comparator circuit 54 outputs a high level signal (point $\underline{d}$). On the other hand, RS flip-flop 55 is reset simultaneously with application of an operating power supply voltage to the microcomputer by a power-on reset signal POR generated from a power-on reset circuit (not shown) and outputs a low level dump enable signal $S_{DE}$ (point $\underline{c}$.) If the secret codes match in this state, as mentioned above, since the potential at point $\underline{d}$ is high, RS flip-flop 55 is set. Therefore, the dump enable signal becomes high and it is possible to effect the data dump operation. On the contrary, if the secret codes do not match, the potential of point $\underline{d}$ becomes low, and RS flip-flop 55 is not set, so that the dump enable signal $S_{DE}$ (point $\underline{c}$) is maintained at a low level. Therefore, in this case, the data dump operation becomes impossible. Incidentally, the secret code may be inputted through a data bus or an address bus, and the signal system of the secret codes may be a series, parallel, or series-parallel system.

Figure 6A illustrates a dump circuit which is used in a microcomputer as another embodiment of the present invention and in which dumped data outputs are camouflaged to render it impossible to decode them. The circuit shown in Fig. 6A comprises PLA 60 inserted in a readout data line from ROM 4 and changes the sequence of the dumped data outputs or converts them into secret data consisting of a combination of noninverted data and inverted data of the originally readout signals from ROM 4. PLA 60 is provided with various gates and inverters and converts input data to secret data according to a predetermined rule, that is, renders it impossible to decode the dumped output data.

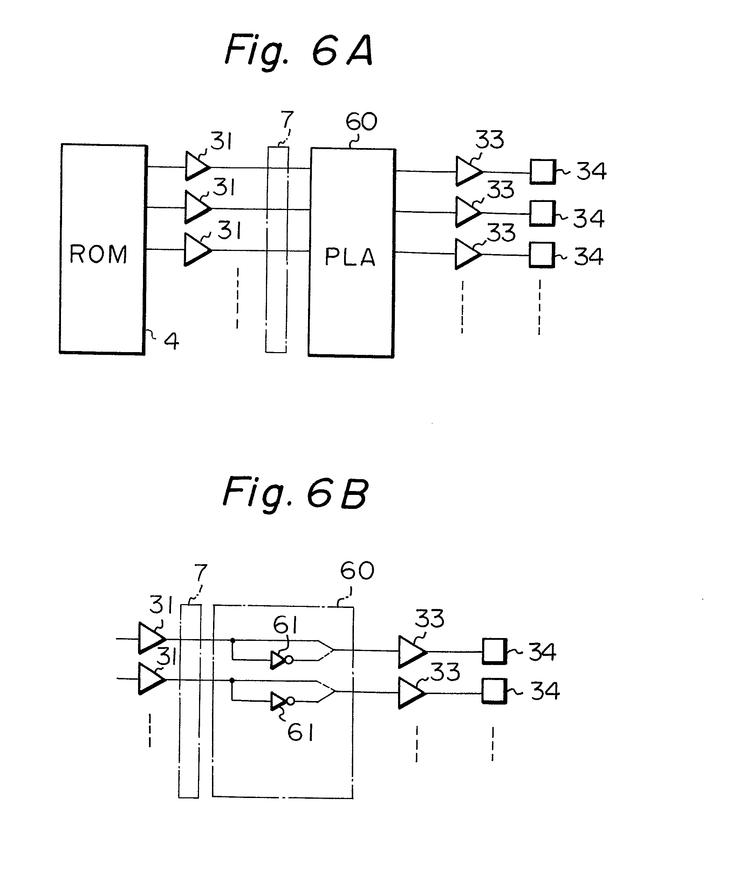

Figure 6B illustrates an example of the above-mentioned circuit of PLA 60. PLA 60 of Fig. 6B comprises a plurality of inverters 61 and a route-designating ROM (not shown). The content of the route-designating ROM determines whether or not each of inverters 61 is inserted into a respective one of the data lines. Therefore, if a user designates inversion or noninversion for each bit, information corresponding to this designation is written in said ROM.

In the circuits of Figs. 6A and 6B, the dumped data outputs are camouflaged. In the present invention, there may be adopted a modification in which allotment of the sequence of address inputs to respective input termals is secretly changed so as to render arrangement of addresses illegible or in which address inputs are converted to secret address codes consisting of a combination of noninverted bits and inverted bits of the address inputs so as to render it impossible to decode the resultant dumped outputs.

As is apparent from the foregoing description, according to the present invention, since the operation of the data dump means can be inhibited or the dumped data output or dump address input can be camouflaged, third persons cannot learn the stored content of the built-in memory, such as a ROM. Therefore, it becomes impossible for third persons to imitate the product using the microcomputer according to the present invention.

In the microcomputer according to the present invention, in which the ROM for storing data and programs and the ROM in the dump enable flag are comprised of EPROM's, the adjacent disposition of the EPROM's on a semiconductor chip makes it impossible to change the content of only the ROM in the dump enable flag. Therefore, imitation of the products using the microcomputer can be surely prevented.

## CLAIMS

1. A microcomputer comprising: built-in read-only memory for storing programs and data, and a data dump means for outputting the content of said built-in read-only memory; and a dump inhibiting means for inhibiting the operation of said data dump means.

2. A microcomputer as set forth in claim 1, wherein said dump inhibiting means comprises a dump enable flag means and transfer gates for passing dumped data under the control of said dump enable flag means.

3. A microcomputer as set forth in claim 2, wherein said dump enable flag means comprises a programmable read-only memory for storeing dump enable data.

4. A microcomputer as set forth in claim 3, wherein at least one of said built-in read-only memory and said programmable read-only memory of said dump enable flag means is an erasable read-only memory and wherein when the content of said programmable read-only memory is erased, said dump enable flag means outputs a dump enable signal which enables data dumping operation.

5. A microcomputer as set forth in claim 4, wherein said built-in read-only memory and said programmable read--only memory are erasable and programmable read-only memories whose contents can be erased by irradiating ultraviolet rays and which are disposed adjacently to each other so that it is impossible to erase the content of only one of these memories.

6. A microcomputer as set forth in claim 2, wherein said dump enable flag means comprises at least a secret code memory for storing a predetermined secret code, and a comparator for comparing an input secret code applied to said microcomputer and said predetermined secret code read out from said secret code memory and wherein a dump enable signal is output from said dump enable flag when said comparator detects coincidence between said input secret code and said predetermined secret code, thereby enabling

- 10 -

0062438

data dumping operation.

7. A microcomputer comprising: a built-in read-only memory for storing programs and data; and a data dump means for outputting the content of said built-in read-only memory; and a camouflaging means for camouflaging data dumped from said built-in read-only memory by said data dump means.

8. A microcomputer as set forth in claim 7, wherein said camouflaging means changes the sequence of the data read out from said built-in read-only memory and/or inverts a part or all of said data read out from said built-in read-only memory according to the predetermined rule, thereby camouflaging dumped data.

9. A microcomputer as set forth in claim 7, wherein said camouflaging means changes the sequence of dump address data supplied to said built-in read-only memory and/or inverts a part or all of said dump address data according to the predetermined rule, thereby camouflaging dumped data.

*Fig. 1*

*Fig. 2*

## Fig. 3

## Fig. 4

# Fig. 5

4

0062438

## Fig. 6 A

## Fig. 6 B